# FASCICULE DE BREVET EUROPEEN

(11) **EP 3 075 599 B1**
(45) Date de publication et mention de la délivrance du brevet: **04.10.2017**
(21) Numéro de dépôt: 16020087.9
(22) Date de dépôt: 18.03.2016
(51) Int. Cl.: B60N 2/38, A47C 4/02, A47C 7/02, B60N 2/70, B60N 2/72, B61D 33/00

(54) **COUSSIN D'ASSISE, SIÈGE POUR UN ENGIN AGRICOLE COMPORTANT UN TEL COUSSIN D'ASSISE, PROCÉDÉ D'INSTALLATION ET UTILISATION DU COUSSIN D'ASSISE**
SITZPOLSTER, SITZ EINES LANDWIRTSCHAFTLICHEN GERÄTS, DER EIN SOLCHES SITZPOLSTER UMFASST, VERFAHREN ZUR MONTAGE UND VERWENDUNG DIESES SITZPOLSTERS
SEAT CUSHION, SEAT FOR AN AGRICULTURAL IMPLEMENT COMPRISING SUCH A SEAT CUSHION, METHOD FOR INSTALLING AND USING THE SEAT CUSHION

(30) Priorité: 30.03.2015 FR 1500633
(43) Date de publication de la demande: 05.10.2016
(73) Titulaire: G.I.A., 77100 Mareuil Les Meaux (FR)
(72) Inventeur: Rain, Dominique, 77510 La Tretoire (FR)
(74) Mandataire: GPI & Associés

(56) Documents cités:
- EP-A1- 2 279 905
- EP-A2- 1 000 856
- DE-A1- 19 902 379
- FR-A1- 2 698 832
- US-A- 4 065 182
- US-A1- 2003 151 294
- US-B1- 6 637 823

## Description

### DOMAINE TECHNIQUE

La présente invention concerne le domaine des sièges pour engins agricoles. Un engin agricole est par exemple un tracteur.

### ARRIÈRE-PLAN TECHNOLOGIQUE

Un siège pour un engin agricole, comporte généralement :
- une assise comportant :
- un plateau d'assise percé de nombreuses ouvertures,
- un coussin d'assise,
- un dossier,
- des montants reliant le plateau d'assise au dossier,
- une suspension sur laquelle le plateau d'assise est fixé.

FR-A-2698 832 montre un siège dont le coussin d'assise peut être changé.

Le coussin d'assise est généralement fixé au plateau d'assise au moyen de vis passant dans les ouvertures du plateau d'assise. Le changement du coussin d'assise est ainsi assez long et peut être assez compliqué.

Or, les sièges d'engins agricoles sont soumis à rude épreuve, de sorte que le coussin d'assise se dégrade rapidement. Il est donc nécessaire de le changer.

L'invention a pour but de proposer un coussin d'assise pouvant être facilement installé sur de nombreux modèles de siège d'engin agricole.

### RÉSUMÉ DE L'INVENTION

À cet effet, il est proposé un coussin d'assise pour une assise d'un siège d'un engin agricole, comportant :
- un bloc souple,
- des premier et deuxième câbles d'attache destinés à attacher le bloc souple et présentant chacun une extrémité libre,
- des première et deuxième butées destinées à être montées respectivement sur les premier et deuxième câbles d'attache, la deuxième butée étant mobile le long du deuxième câble d'attache.

Grâce à l'invention, il est possible de fixer le coussin d'assise avec les câbles d'attache qui sont des éléments simples et adaptables à différents modèles de siège d'engin agricole. Ainsi, il est possible de concevoir un coussin d'assise standard. En outre, la simplicité des éléments mis en oeuvre permet au coussin d'assise de présenter un prix de revient inférieur à celui des pièces d'origine.

De façon optionnelle, les câbles d'attaches sortent d'une face inférieure du bloc souple.

De façon optionnelle également, le coussin d'assise comporte un câble passant au travers du bloc souple et présentant deux segments d'extrémité s'étendant à l'extérieur du bloc souple, ces deux segments d'extrémité constituant respectivement les câbles d'attache.

De façon optionnelle également, le câble monte, dans le bloc souple, au moins à la moitié, de préférence aux deux-tiers, de la hauteur du bloc souple, définie comme la distance entre la face inférieure et une face supérieure du bloc souple.

De façon optionnelle également, le coussin d'assise comporte un tube passant au travers du bloc souple et dans lequel le câble est inséré.

De façon optionnelle également, le coussin d'assise comporte en outre une housse, et les câbles d'attache comportent des extrémités fixées à la housse.

De façon optionnelle également, le coussin d'assise comporte deux câbles présentant chacun un segment interne s'étendant dans le bloc souple et fixé au bloc souple et un segment externe s'étendant à l'extérieur du bloc souple, les segments externes formant respectivement les câbles d'attache.

Il est en outre proposé un siège pour un engin agricole, comportant :
- une assise comportant :
   - un plateau d'assise percé de deux ouvertures,
   - un coussin d'assise selon l'invention, avec la face inférieure contre le plateau d'assise, les câbles d'attache passés respectivement dans les ouvertures du plateau d'assise et les butées en buté contre le plateau d'assise, de manière à maintenir le bloc souple contre le plateau d'assise,
- un dossier,
- des montants reliant le plateau d'assise au dossier,
- une suspension sur laquelle le plateau d'assise est fixé,
le bloc souple présentant une partie arrière insérée dans une renfoncement s'étendant entre les montants et sous le dossier, de manière à maintenir le bloc souple contre le plateau d'assise.

Il est en outre proposé l'utilisation d'un coussin d'assise selon l'invention, en tant que coussin d'assise d'une assise d'un siège d'un engin agricole.

### DESCRIPTION DES FIGURES

La figure 1 est une vue en trois dimensions d'un premier coussin d'assise selon l'invention, en position retournée.
La figure 2 est une vue en trois dimensions du premier coussin d'assise, en position normale.
La figure 3 est une vue en coupe du premier coussin d'assise.
La figure 4 est une vue en trois dimensions d'un siège d'un engin agricole, sans coussin d'assise.
La figure 5 est schéma-blocs illustrant les étapes d'un procédé d'installation du premier coussin d'assise des figures 1 à 3 sur le siège de la figure 4.
La figure 6 est une vue en trois dimensions du siège de la figure 4 avec le coussin d'assise en cours d'installation.
La figure 7 est une vue en coupe d'un deuxième coussin d'assise selon l'invention.
La figure 8 est une vue en coupe d'un troisième coussin d'assise selon l'invention.

### DESCRIPTION DÉTAILLÉE

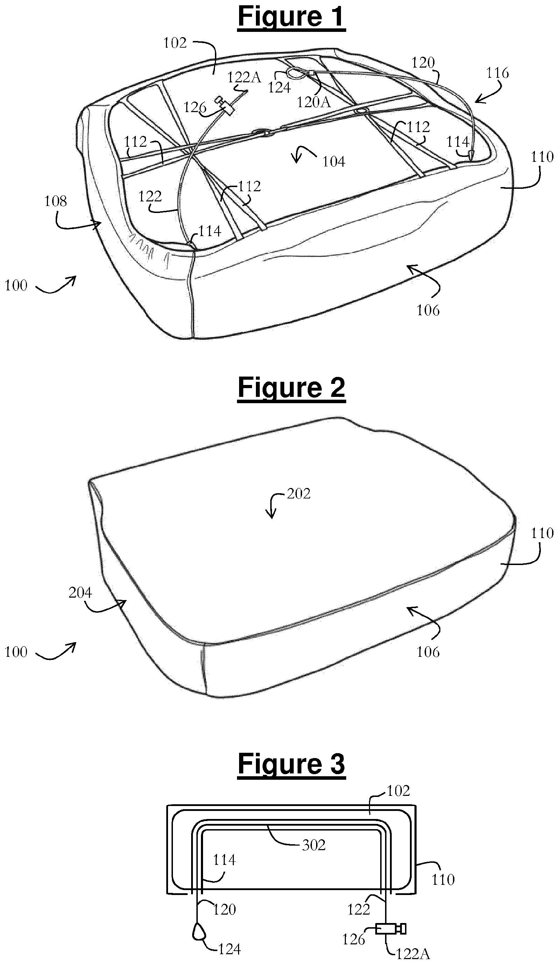

Des modes de réalisation de l'invention vont à présent être décrits, à titre d'exemples uniquement, en référence aux figures 1 à 8.

En référence aux figures 1 à 3, un coussin d'assise 100 selon un premier mode de réalisation de l'invention va à présent être décrit.

En référence à la figure 1, le coussin d'assise 100, représenté retourné, comporte un bloc souple 102 de forme générale parallélépipédique. Comme cela est visible sur la figure 1, le bloc souple 102 présente une face supérieure (non visible), une face inférieure 104, une face avant 106, une face arrière (non visible), une face droite (non visible) et une face gauche 108. Le bloc souple 102 est par exemple moulé en mousse viscoélastique présentant une à densité supérieure à 85 kg/m³.

Le coussin d'assise 100 comporte en outre une housse 110. La housse 110 recouvre la face supérieure, la face arrière, la face avant 106, la face droite et la face gauche 108 mais laisse la face inférieure 102 découverte.

Le coussin d'assise 100 comporte en outre des élastiques 112 reliant des pans opposées de la housse 110 le long de la face inférieure 104 et permettant de tendre la housse 110 sur le bloc souple 102.

Le coussin d'assise 100 comporte en outre un tube 114 passant au travers d'une partie avant du bloc souple 102, chacune des extrémités du tube 114 sortent de la face inférieure 104 du bloc souple 102.

Le coussin d'assise 100 comporte en outre un câble 116, par exemple un câble métallique, destiné à être introduit dans le tube 114 de manière à passer lui-aussi au travers de la partie avant du bloc souple 102. Une fois introduit, le câble 116 est destiné à présenter un segment interne (visible sur la figure 3) s'étendant dans le bloc souple 102 et deux segments externes sortant de la face inférieure 104 du bloc souple 102, de préférence à moins de 10 cm de la face avant 106 du bloc souple 102 et à moins de 5 cm des faces droite et gauche 108 respectives du bloc souple 102. Les segments externes forment des câbles d'attache 120, 122 destinés à attacher le bloc souple 102 et présentant chacun une extrémité libre 120A, 122A. L'autre extrémité de chaque câble d'attache 120, 122 est liée au bloc souple 102 par le segment interne du câble 116.

Le coussin d'assise 100 comporte en outre des première et deuxième butées 124, 126 destinées à être respectivement fixées sur les deux portions externes 120, 122 du câble 116.

Dans l'exemple décrit, la première butée 124 est solidaire de la première portion externe 120 du câble 116. Plus précisément, la première butée 124 comporte une boucle obtenue en repliant l'extrémité libre de la portion externe 120 du câble 116 sur cette portion externe 120 du câble 116 et une bague enserrant l'extrémité et la partie de portion externe 120 du câble sur laquelle elle est repliée.

La deuxième butée 126 est une butée mobile destinée à glisser le long de la deuxième portion externe 122 du câble 116 et à être fixée à l'endroit choisi par l'utilisateur. La deuxième butée 126 peut également être retirée de la deuxième portion externe 120 du câble 116. Dans l'exemple décrit, la deuxième butée 126 comporte un curseur et une vis engagée dans le curseur et destinée, en la vissant, à venir écraser la deuxième portion externe 120 du câble 116 pour fixer le curseur.

En référence à la figure 2, le coussin d'assise 100 est représenté à l'endroit et la face supérieure 202 et la face droite 204 du bloc souple 202 sont visibles.

En référence à la figure 3, le segment interne du câble 116 porte la référence 302. Par ailleurs, il sera apprécié que le tube 114, et donc également le câble 116 lorsque ce dernier passe dans le tube 114, monte, dans le bloc souple 102, au moins à la moitié, de préférence au moins aux deux-tiers, de la hauteur du bloc souple 102 définie par la distance entre la face inférieure 104 et une face supérieure 202 du bloc souple 102.

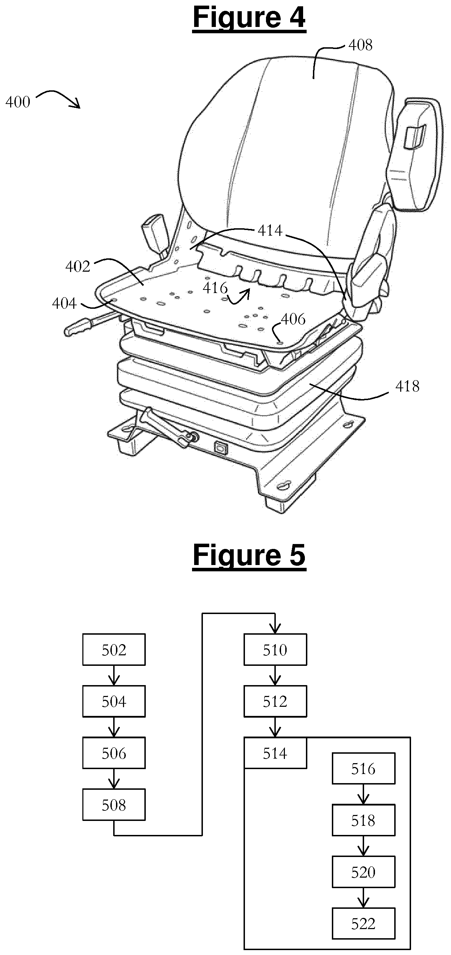

En référence à la figure 4, un siège 400 pour engin agricole va à présent être décrit.

Le siège 400 comporte un plateau d'assise 402 percé de plusieurs ouvertures. Parmi ces ouvertures, se trouvent en particulier des première et deuxième ouvertures 404, 406.

Le siège 400 comporte en outre un dossier 408.

Le siège 400 comporte en outre des montants 414 reliant le plateau de l'assise 402 au dossier 408. Un espace vide s'étend entre les montants 414 et en dessous du dossier 408, cet espace vide formant un renfoncement 416.

Le siège 400 comporte en outre une suspension 418 sur laquelle est fixé le plateau d'assise 402, destiné à recevoir un coussin d'assise. La suspension 418 est destinée à être fixée à un châssis de l'engin agricole.

En référence à la figure 5, un procédé d'installation du coussin d'assise 100 sur le siège 400 va à présent être décrit.

Si le câble 116 est préalablement inséré dans le tube 114, au cours d'une étape 502, l'utilisateur retire tout d'abord la deuxième butée 126 par l'extrémité libre du deuxième câble d'attache 122, puis, au cours d'une étape 504, l'utilisateur sort le câble 116 du tube 114.

Au cours d'une étape 506, l'utilisateur insère la partie arrière du bloc souple 102 dans le renfoncement 416, avec la partie avant du bloc souple 102 relevée du plateau d'assise 402.

Au cours d'une étape 508, l'utilisateur fait passer le câble 116, par l'extrémité libre du deuxième câble d'attache 122, dans la première ouverture 404 du plateau d'assise, puis, au cours d'une étape 510, dans le tube 114 jusqu'à ce que la deuxième extrémité libre 122A ressorte du tube 114, puis, au cours d'une étape 512, dans la deuxième ouverture 406 du plateau d'assise 402.

Au cours d'une étape 514, l'utilisateur règle ensuite les butées pour les placer en buté contre le plateau d'assise 402.

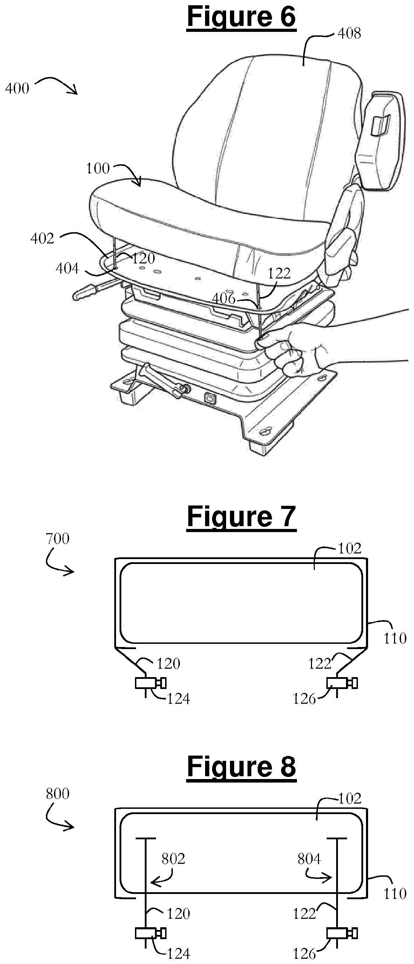

Pour cela, au cours d'une étape 516, l'utilisateur tire sur la deuxième extrémité 122A jusqu'à ce que la première butée 124 vienne en butée contre le plateau d'assise 402. Cette configuration est illustrée sur la figure 6.

Au cours d'une étape 518, l'utilisateur continue de tirer sur la deuxième extrémité 122A pour rapprocher la partie avant du bloc souple 102 contre le plateau d'assise 402.

Au cours d'une étape 520, l'utilisateur enfile la deuxième butée 126 par la deuxième extrémité libre 122A et la fait glisser sur le deuxième câble d'attache 122 jusqu'à ce qu'elle vienne en butée contre le plateau d'assise 402.

Au cours d'une étape 522, l'utilisateur fixe la deuxième butée 126 en vissant la vis.

De manière surprenante, les inventeurs ont remarqué que le coussin d'assise 100 restait bien en place sur le plateau d'assise 402, alors que le coussin d'assise 100 n'est maintenu en place que par l'insertion de sa partie arrière dans le renfoncement 416 et par les câbles d'attache 120, 122.

En référence à la figure 7, un coussin d'assise 700 selon un deuxième mode de réalisation de l'invention va à présent être décrit.

Ce mode de réalisation est identique à celui des figures 1 à 3, si ce n'est que les câbles d'attache 120, 122 comportent des extrémités fixées à la housse 110.

En outre, les deux butées 124, 126 sont mobiles sur leurs câbles d'attache 120, 122 respectifs.

En référence à la figure 8, un coussin d'assise 800 selon un troisième mode de réalisation de l'invention va à présent être décrit.

Ce mode de réalisation est identique à celui des figures 1 à 3, si ce n'est qu'il comporte deux câbles 802, 804 présentant chacun un segment interne s'étendant dans le bloc souple 102 et fixé au bloc souple 102 et un segment externe s'étendant à l'extérieur du bloc souple 102, les segments externes formant respectivement les câbles d'attache 120, 122.

En outre, les deux butées 124, 126 sont mobiles sur leurs câbles d'attache 120, 122 respectifs.

La présente invention n'est pas limitée aux modes de réalisation décrits précédemment, mais est au contraire définie par les revendications qui suivent. Il sera en effet apparent à l'homme du métier que des modifications peuvent y être apportées.

Par ailleurs, les termes utilisés dans les revendications ne doivent pas être compris comme limités aux éléments des modes de réalisation décrits précédemment, mais doivent au contraire être compris comme couvrant tous les éléments équivalents que l'homme du métier peut déduire à partir de ses connaissances générales.

**RÉFÉRENCES**

| | |
|---|---|
| Premier coussin d'assise | 100 |
| Bloc souple | 102 |
| Face inférieure du bloc souple | 104 |
| Face avant du bloc souple | 106 |
| Face gauche du bloc souple | 108 |
| Housse | 110 |
| Élastiques | 112 |
| Tube | 114 |
| Câble | 116 |
| Premier câble d'attache | 120 |
| Extrémité libre du premier câble d'attache | 120A |
| Deuxième câble d'attache | 122 |
| Extrémité libre du deuxième câble d'attache | 122A |
| Première butée | 124 |
| Deuxième butée | 126 |
| | |
| Face supérieure du bloc souple | 202 |
| Face droite du bloc souple | 204 |
| | |
| Segment interne du câble | 302 |
| | |
| Siège | 400 |
| Plateau d'assise | 402 |
| Première ouverture du plateau d'assise | 404 |
| Deuxième ouverture du plateau d'assise | 406 |
| Dossier | 408 |
| Montants | 414 |
| Renfoncement | 416 |
| Suspension | 418 |
| | |
| Deuxième coussin d'assise | 700 |
| Troisième coussin d'assise | 800 |
| Câbles | 802, 804 |

## Revendications

1. Coussin d'assise (100 ; 700 ; 800) pour une assise d'un siège (400) d'un engin agricole, comportant :
- un bloc souple (102),
- des premier et deuxième câbles d'attache (120, 122) destinés à attacher le bloc souple (102) et présentant chacun une extrémité libre (120A, 122A),
- des première et deuxième butées (124, 126) destinées à être montées respectivement sur les premier et deuxième câbles d'attache (120, 122), la deuxième butée (126) étant mobile le long du deuxième câble d'attache (122).

2. Coussin d'assise (100 ; 800) selon la revendication 1, dans lequel les câbles d'attaches (120, 122) sortent d'une face inférieure du bloc souple (122).

3. Coussin d'assise (100) selon la revendication 1 ou 2, comportant un câble (116) passant au travers du bloc souple (102) et présentant deux segments d'extrémité s'étendant à l'extérieur du bloc souple (102), ces deux segments d'extrémité constituant respectivement les câbles d'attache (120, 122).

4. Coussin d'assise (100) selon la revendication 3, dans lequel le câble (116) monte, dans le bloc souple (102), au moins à la moitié, de préférence aux deux-tiers, de la hauteur du bloc souple (102), définie comme la distance entre la face inférieure (104) et une face supérieure (202) du bloc souple (102).

5. Coussin d'assise (100) selon la revendication 4, comportant un tube (114) passant au travers du bloc souple (102) et dans lequel le câble (116) est inséré.

6. Coussin d'assise (700) selon la revendication 1, comportant en outre une housse (110), et dans lequel les câbles d'attache (120, 122) comportent des extrémités fixées à la housse (110).

7. Coussin d'assise (800) selon la revendication 1 ou 2, comportant deux câbles présentant chacun un segment interne s'étendant dans le bloc souple (102) et fixé au bloc souple (102) et un segment externe s'étendant à l'extérieur du bloc souple (102), les segments externes formant respectivement les câbles d'attache (120, 122).

8. Siège (400) pour un engin agricole, comportant :
- une assise comportant :
- un plateau d'assise (402) percé de deux ouvertures (404, 406),
- un coussin d'assise (100 ; 700 ; 800) selon l'une quelconque des revendications 1 à 7, avec la face inférieure contre le plateau d'assise (402), les câbles d'attache (120, 122) passés respectivement dans les ouvertures (404, 406) du plateau d'assise (402) et les butées (124, 126) en buté contre le plateau d'assise (402), de manière à maintenir le bloc souple (102) contre le plateau d'assise (402),
- un dossier (408),
- des montants (414) reliant le plateau d'assise (402) au dossier (408),
- une suspension (418) sur laquelle le plateau d'assise (402) est fixé,
le bloc souple (102) présentant une partie arrière insérée dans une renfoncement (416) s'étendant entre les montants (414) et sous le dossier (408), de manière à maintenir le bloc souple (102) contre le plateau d'assise (402).

9. Procédé d'installation d'un coussin d'assise (100 ; 700 ; 800) selon l'une quelconque des revendications 1 à 7 sur un siège (400) d'un engin agricole comportant :
- une assise comportant :
- un plateau d'assise (402) percé de deux ouvertures (404, 406),
- un dossier (408),
- des montants (414) reliant le plateau d'assise (402) au dossier (408),
- une suspension (418) sur laquelle le plateau d'assise (402) est fixé,
le procédé comportant :
- l'insertion (506) d'une partie arrière du bloc souple (102) dans un renfoncement (416) s'étendant entre les montants (414) et sous le dossier (408),
- le passage des câbles d'attache (120, 122) respectivement dans les ouvertures (406, 408) du plateau d'assise (402),
- le réglage des butées (124, 126) pour les placer en buté contre le plateau d'assise (402), de manière à maintenir le bloc souple (102) contre le plateau d'assise (402).

10. Utilisation d'un coussin d'assise (100 ; 700 ; 800) selon l'une quelconque des revendications 1 à 7, en tant que coussin d'assise (100 ; 700 ; 800) d'une assise d'un siège (400) d'un engin agricole.

## Patentansprüche

1. Sitzpolster (100; 700; 800) für eine Sitzfläche eines Sitzes (400) einer landwirtschaftlichen Maschine, mit:
- einem weichen Block (102),
- einem ersten und einem zweiten Anbindeseil (120, 122), die dazu bestimmt sind, den weichen Block (102) anzubinden, und die jeweils ein freies Ende (120A, 122A) aufweisen,
- einem ersten und einem zweiten Anschlag (124, 126), die dazu bestimmt sind, jeweils auf dem ersten und dem zweiten Anbindeseil (120, 120) montiert zu werden, wobei der zweite Anschlag (126) entlang dem zweiten Anbindeseil (122) beweglich ist.

2. Sitzpolster (100; 800) nach Anspruch 1, bei dem Anbindeseile (120, 122) aus einer Unterseite des weichen Blocks (122) heraustreten.

3. Sitzpolster (100) nach Anspruch 1 oder 2, mit einem Seil (116), das durch den weichen Block (102) verläuft und zwei Endabschnitte aufweist, die sich außerhalb des weichen Blocks (102) erstrecken, wobei diese beiden Endabschnitte jeweils die Anbindeseile (120, 122) bilden.

4. Sitzpolster (100) nach Anspruch 3, bei dem das Seil (116) in dem weichen Block (102) mindestens bis zur Hälfte, vorzugsweise bis zu zwei Dritteln, der Höhe des weichen Blocks (102) hochreicht, die definiert wird als der Abstand zwischen der Unterseite (104) und einer Oberseite (202) des weichen Blocks (102).

5. Sitzpolster (100) nach Anspruch 4, mit einer Hülse (114), die durch den weichen Block (102) verläuft, und in der das Seil (116) eingefügt ist.

6. Sitzpolster (700) nach Anspruch 1, welches unter anderem einen Überzug (110) aufweist, und bei dem die Anbindeseile (120, 122) Enden aufweisen, die an dem Überzug (110) befestigt sind.

7. Sitzpolster (800) nach Anspruch 1 oder 2, welches zwei Seile aufweist, die jeweils einen inneren Abschnitt aufweisen, der sich in dem weichen Block (102) erstreckt, und der an dem weichen Block (102) befestigt ist, und einen äußeren Abschnitt, der sich außerhalb des weichen Blocks (102) erstreckt, wobei die äußeren Abschnitte jeweils die Anbindeseile (120, 122) bilden.

8. Sitz (400) für eine landwirtschaftliche Maschine, mit:
- einem Sitzpolster, welches aufweist:
- eine Sitzplatte (402), die mit zwei Öffnungen (404, 406) durchbohrt ist,
- ein Sitzpolster (100; 700; 800) nach einem der Ansprüche 1 bis 7, dessen Unterseite auf der Sitzplatte (402) anliegt, wobei die Anbindeseile (120, 122) jeweils durch die Öffnungen (404, 406) der Sitzplatte (402) durchgeführt sind, und die Anschläge (124, 126) gegen die Sitzplatte (402) anschlagen, derart, dass der weiche Block (102) gegen die Sitzplatte (402) gehaltert wird,
- eine Rückenlehne (408),
- Stützen (414), die die Sitzplatte (402) mit der Rückenlehne (408) verbinden,
- ein Federungssystem (418), auf dem die Sitzplatte (402) befestigt ist,
wobei der weiche Block (102) einen hinteren Teil aufweist, der in eine Verstärkung (416), die sich zwischen den Stützen (414) und unter die Rückenlehne (408) erstreckt, eingefügt ist, derart, dass der weiche Block (102) gegen die Sitzplatte (402) gehaltert wird.

9. Verfahren zur Montage eines Sitzpolsters (100; 700; 800) nach einem der Ansprüche 1 bis 7, auf einem Sitz (400) einer landwirtschaftlichen Maschine, mit:
- einem Sitz, welcher aufweist:
- eine Sitzplatte (402), die mit zwei Öffnungen (404, 406) durchbohrt ist,
- eine Rückenlehne (408),
- Stützen (414), die die Sitzplatte (402) mit der Rückenlehne (408) verbinden,
- ein Federungssystem (418), auf dem die Sitzplatte (402) befestigt ist,
wobei das Verfahren folgende Schritte aufweist:
- Einfügen (506) eines hinteren Teils des weichen Blocks (102) in eine Verstärkung (416), die sich zwischen den Stützen (414) und unter der Rückenlehne (408) erstreckt,
- Durchführen der Anbindeseile (120, 122) jeweils durch die Öffnungen (406, 408) der Sitzplatte (402),
- Justieren der Anschläge (124, 126), um sie in Anschlag gegen die Sitzplatte (402) zu platzieren, derart, dass sie den weichen Block (102) gegen die Sitzplatte (402) haltern.

10. Verwendung eines Sitzpolsters (100; 700; 800) nach einem der Ansprüche 1 bis 7, als ein Sitzpolster (100; 700; 800) einer Sitzfläche eines Sitzes (400) einer landwirtschaftlichen Maschine.

## Claims

1. A seat base cushion (100; 700; 800) for a seat base of a seat (400) of an agricultural machine, comprising:
- a flexible block (102),
- first and second attachment cables (120, 122) intended for attaching the flexible block (102) and each having a free end (120A, 122A),
- first and second stops (124, 126) intended to be mounted on the first and second attachment cables (120, 122) respectively, the second stop (126) being mobile along the second attachment cable (122).

2. A seat base cushion (100; 800) according to Claim 1, in which the attachment cables (120, 122) emerge from a lower face of the flexible block (122).

3. A seat base cushion (100) according to Claim 1 or 2, comprising a cable (116) passing through the flexible block (102) and having two end segments extending on the outside of the flexible block (102), these two end segments constituting the attachment cables (120, 122) respectively.

4. A seat base cushion (100) according to Claim 3, in which the cable (116), in the flexible block (102), rises at least to half, preferably to two thirds, of the height of the flexible block (102), defined as the distance between the lower face (104) and an upper face (202) of the flexible block (102).

5. A seat base cushion (100) according to Claim 4, comprising a tube (114) passing through the flexible block (102) and into which the cable (116) is inserted.

6. A seat base cushion (700) according to Claim 1, furthermore comprising a cover (110), and in which the attachment cables (120, 122) comprise ends fixed to the cover (110).

7. A seat base cushion (800) according to Claim 1 or 2, comprising two cables each having an internal segment extending within the flexible block (102) and fixed to the flexible block (102), and an external segment extending on the outside of the flexible block (102), the external segments respectively forming the attachment cables (120, 122).

8. A seat (400) for an agricultural machine, comprising:
- a seat base, comprising:
- a seat base plate (402) provided with two openings (404, 406),
- a seat base cushion (100; 700; 800) according to any one of Claims 1 to 7, with the lower face against the seat base plate (402), the attachment cables (120, 122) passed respectively into the openings (404, 406) in the seat base plate (402) and the stops (124, 126) butting against the seat base plate (402), so as to hold the flexible block (102) against the seat base plate (402),
- a seat back (408),
- uprights (414) connecting the seat base plate (402) to the seat back (408),
- a suspension (418) on which the seat base plate (402) is fixed,
the flexible block (102) having a rear portion inserted into a recess (416) extending between the uprights (414) and beneath the seat back (408), so as to hold the flexible block (102) against the seat base plate (402).

9. A method for installing a seat base cushion (100; 700; 800) according to any one of Claims 1 to 7 on a seat (400) of an agricultural machine comprising:
- a seat base, comprising:
- a seat base plate (402) provided with two openings (404, 406),
- a seat back (408),
- uprights (414) connecting the seat base plate (402) to the seat back (408),
- a suspension (418) on which the seat base plate (402) is fixed,
the method comprising:
- inserting (506) a rear portion of the flexible block (102) into a recess (416) extending between the uprights (414) and beneath the seat back (408),
- passing the attachment cables (120, 122) respectively into the openings (406, 408) in the seat base plate (402),
- adjusting the stops (124, 126) in order to place them butting against the seat base plate (402), so as to hold the flexible block (102) against the seat base plate (402).

10. Use of a seat base cushion (100; 700; 800) according to any one of Claims 1 to 7 as a seat base cushion (100; 700; 800) of a seat base of a seat (400) of an agricultural machine.
